# EUROPÄISCHE PATENTSCHRIFT

(11) **EP 0 847 348 B1**
(45) Veröffentlichungstag und Bekanntmachung des Hinweises auf die Patenterteilung: **06.12.2000**
(21) Anmeldenummer: 96922022.7
(22) Anmeldetag: 22.06.1996
(51) Int. Cl.: B60S 9/10

(54) **FAHRBARE ARBEITSMASCHINE MIT SEITLICH AUSSCHWENKBAREN STÜTZAUSLEGERN**
MOBILE MACHINE WITH LATERALLY PIVOTED SUPPORTING STRUTS
ENGIN MOBILE A BRAS D'APPUI A PIVOTEMENT LATERAL

(30) Priorität: 29.08.1995 DE 19531697
(43) Veröffentlichungstag der Anmeldung: 17.06.1998
(73) Patentinhaber: PUTZMEISTER Aktiengesellschaft, 72631 Aichtal (DE)
(72) Erfinder: SCHILLINGER, Hans-Dieter, D-78579 Neuhausen (DE); LÖRINCZ, Klaus, D-72622 Nürtingen (DE)
(74) Vertreter: Wolf, Eckhard, Dr.-Ing.
(86) Internationale Anmeldenummer: EP9602724
(87) Internationale Veröffentlichungsnummer: WO9708026

(56) Entgegenhaltungen:
- EP-A- 0 357 988
- GB-A- 1 458 280
- US-A- 4 394 913
- US-A- 4 624 357
- US-A- 4 723 667

## Beschreibung

Die Erfindung betrifft eine fahrbare Arbeitsmaschine mit einem mehrachsigen, die Arbeitsmaschine tragenden Fahrzeugunterbau und mindestens einem um eine zur Fahrzeughochachse parallele Schwenkachse am Fahrzeugunterbau oder an einem unterbaufesten Tragrahmen von einer gegen eine Fahrzeuglängsseite eingeschwenkten Ruhestellung in eine seitlich ausgeschwenkte Abstützstellung verschwenkbaren, an seinem freien Ende mit einem vorzugsweise vertikal ausfahrbaren Fußteil bodenseitig abstützbaren Stützausleger und mit einem den Stützausleger in seiner ausgeschwenkten Abstützstellung gegen Verdrehen um seine Schwenkachse sperrenden Verriegelungsmechanismus.

Bei einer fahrbaren Arbeitsmaschine ist es an sich bekannt (DE-A-44 28 069), die an einem Tragrahmen des Unterbaus um eine horizontale Schwenkachse drehbar angelenkten Stützausleger mit Hilfe von doppelt wirkenden Hydrozylindern gegenüber dem Fahrzeugunterbau zu verschwenken. Beim Ausschwenken gelangen die Stützausleger in eine äußerste Schwenklage, die durch die Anordnung der Hydrozylinder gegeben ist. Eine eindeutige Drehpositionierung der Stützausleger gegenüber dem Fahrzeugunterbau ist hierdurch jedoch nicht gewährleistet. Da die Stützausleger sowohl die über die Arbeitsmaschine in den Fahrzeugunterbau eingeleiteten Vertikalkräfte, als auch die Horizontalkräfte in den Untergrund ableiten müssen, kann es beim Auftreten von während des Arbeitsvorgangs auftretenden Momenten und Seitenkräften zu Verschwenkungen im Bereich der Stützausleger kommen, die zu Positionsabweichungen im Bereich der Arbeitsmaschine führen. Dies ist besonders dann von Nachteil, wenn es auf eine positionsgenaue Arbeitsweise der Arbeitsmaschine ankommt, wie dies beispielsweise beim Waschen von Flugzeugen mit Hilfe eines Großmanipulators als Arbeitsmaschine der Fall ist.

Um diesen Nachteil zu vermeiden, ist es bei einer Arbeitsmaschine der eingangs angegebenen Art bekannt (US-A 4394913), einen Verriegelungsmechanismus vorzusehen, der den Stützausleger in seiner ausgeschwenkten Abstützstellung gegen Verdrehen um seine eigene Schwenkachse sperrt. Der Verriegelungsmechanismus weist dort eine halbkreisförmige Verriegelungsplatte auf, die mehrere über den Kreisbogen verteilt angeordnete, vertikal ausgerichtete Bohrungen aufweist, in die ein am Ausleger angeordneter, hydraulisch ausfahrbarer Verriegelungsstift als Verriegelungsmittel einsteckbar ist. Damit ist noch keine ausreichende Spielfreistellung gewährleistet.

Ausgehend hiervon liegt der Erfindung die Aufgabe zugrunde, die bekannte fahrbare Arbeitsmaschine der eingangs angegebenen Art hinsichtlich ihrer Stützauslegeranordnung dahingehend zu verbessern, daß eine verdrehungssichere Lastübertragung in horizontaler und vertikaler Richtung ohne Gelenkspiel im Bereich der Stützausleger möglich ist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung geht von dem Gedanken aus, daß der Stützausleger in seiner ausgeschwenkten Abstützstellung gegen Verdrehen um seine Schwenkachse spielfrei gestellt wird. Um dies zu erreichen, wird gemäß der Erfindung vorgeschlagen, daß der Stützausleger in seiner ausgeschwenkten Abstützstellung parallel zu seiner Schwenkachse zwischen einer Sperrstellung und einer Freigabestellung des Verriegelungsmechanismus begrenzt gegenüber dem Fahrzeugunterbau oder dem Tragrahmen verschiebbar ist.

Der Verriegelungsmechanismus kann zu diesem Zweck eine zwischen einander axial zugewandten stützausleger- oder unterbaufesten Flächen angeordnete, in der ausgeschwenkten Abstützstellung durch axiales Anheben des Stützauslegers kuppelbare Klauenkupplung aufweisen. Die Verschiebebewegung erfolgt zweckmäßig durch mindestens ein zwischen dem Fahrzeugunterbau oder dem Tragrahmen einerseits und dem Stützausleger andererseits angeordnetes, vorzugsweise als Hydrozylinder ausgebildetes Hubglied. In konstruktiver Hinsicht ist es dabei von Vorteil, wenn der Stützausleger zwischen zwei im Abstand übereinander angeordneten, unterbaufesten Lagerlaschen schwenkbar sowie heb- und senkbar gelagert ist.

Eine bevorzugte Ausgestaltung der Erfindung sieht vor, daß der Stützausleger mit einem vorzugsweise hydraulischen Drehmotor um die Schwenkachse verschwenkbar ist. Um den Stützausleger im Anschluß an einen Schwenkvorgang in seiner ausgeschwenkten Endstellung bis zur Verriegelung mit der Klauenkupplung festhalten zu können, ist es von Vorteil, wenn der Drehmotor ein unabhängig vom Verriegelungsmechanismus ansteuerbares Brems- oder Blockierorgan aufweist. Der Drehmotor weist dabei zweckmäßig einen radial über sein Motorgehäuse überstehenden, an seinem freien Ende im Abstand von der Schwenkachse mit dem Stützausleger verbundenen Drehmomentumsetzer auf. Um beim Arbeitsvorgang auftretende Horizontalkräfte noch besser aufnehmen zu können, ist es von Vorteil, wenn das Fußteil eine Sohle aus elastomerem, vorzugsweise bodenseitig geriffeltem Material aufweist.

Eine weitere vorteilhafte Ausgestaltung der Erfindung sieht vor, daß auf jeder Fahrzeuglängsseite mindestens zwei seitlich ausschwenkbare, in ihrer ausgeschwenkten Abstützstellung gegen Verdrehen gesicherte Stützausleger angeordnet sind, wobei zur weiteren Verbesserung der Verdrehungssicherung im rückwärtigen Bereich auf den beiden Längsseiten des Fahrzeugunterbaus zusätzlich je ein mit dem Fahrzeugunterbau oder dem Tragrahmen starr verbundenes, ein vertikal ausfahrbares Fußteil aufweisendes Stützbein vorgesehen werden kann.

Im folgenden wird die Erfindung anhand der Zeichnung näher erläutert. Es zeigen
- Fig. 1: eine Seitenansicht eines fahrbaren Flugzeugwaschgeräts in angehobener Arbeitsstellung;
- Fig. 2a und b: einen Ausschnitt aus dem Tragrahmen des fahrbaren Flugzeugwaschgeräts nach Fig. 1 in schaubildlicher Darstellung mit eingeschwenkten und ausgeschwenkten Stützauslegern;
- Fig. 3a bis e: die Ausschnitte A und B in Fig. 2a und b in vergrößerter Darstellung in verschiedenen Schwenk- und Hubpositionen des Stützauslegers;
- Fig. 4a und b: die Ausschnitte C und D aus Fig. 3b und c in vergrößerter Darstellung.

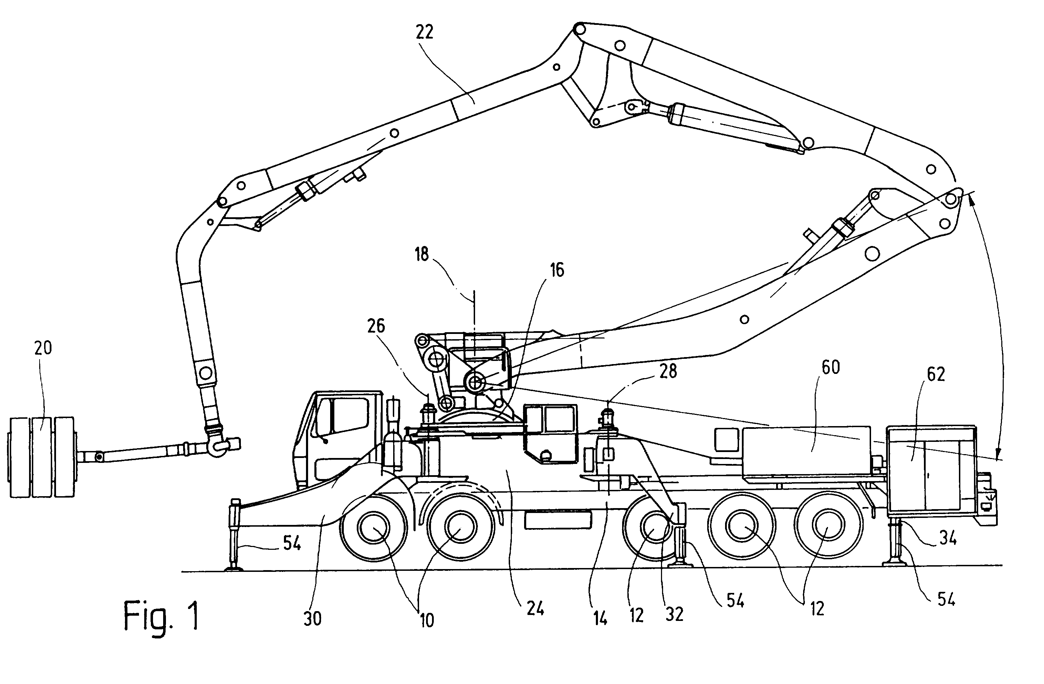

Das in Fig. 1 dargestellte fahrbare Flugzeugwaschgerät besteht im wesentlichen aus einem zwei Vorderachsen 10 und drei Hinterachsen 12 aufweisenden Fahrzeugunterbau 14, einem an einem vorderachsnahen Mastbock 16 um eine vertikale Achse 18 drehbar gelagerten, an seinem freien Ende eine Waschbürste 20 tragenden Knickmast 22, und einer Stützkonstruktion, die einen unterbaufesten Tragrahmen 24, je zwei am Tragrahmen um lotrechte Achsen 26,28 verschwenkbare vordere und mittlere Stützausleger 30,32 und zwei mit dem Tragrahmen 24 starr verbundene rückwärtige Stützbeine 34 aufweist.

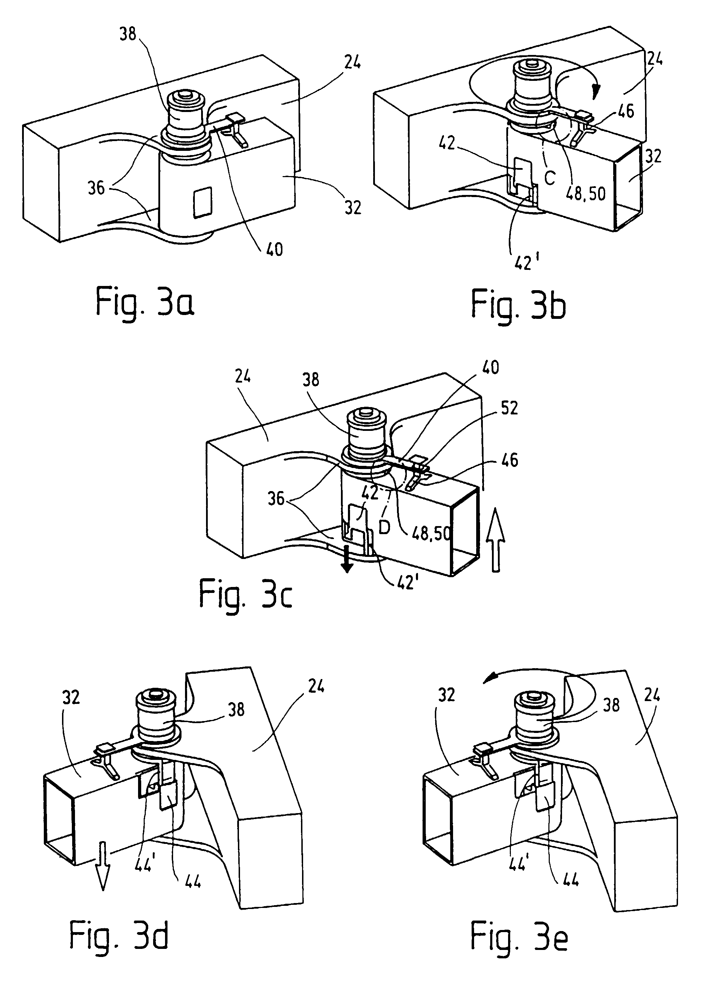

Die Stützausleger 30,32 sind zwischen je zwei Lagerlaschen 36 des Tragrahmens 24 mit Hilfe eines hydraulischen Drehmotors 38 und eines Drehmomentumsetzers 40 um die lotrechten Achsen 26,28 drehbar und mit Hilfe jeweils zweier Hydrozylinder 42,44 begrenzt heb- und senkbar gelagert. Der Zylinderteil der Hydrozylinder 42,44 ist an den Stützauslegern 30,32 befestigt, während die Kolbenstange 42' des Hydrozylinders 42 sich an der unteren und die Kolbenstange 44' des Hydrozylinders 44 an der oberen Lagerlasche 36 abstützt. Der über das Gehäuse des Drehmotors 38 radial überstehende Drehmomentumsetzer 40 greift an einem im Abstand von der Achse 26 bzw. 28 angeordneten Mitnehmer 46 der Stützausleger 30, 32 an. Eine Führungsöffnung 52 im Drehmomentumsetzer 40 sorgt dafür, daß der Mitnehmer 46 sich gegenüber dem Drehmomentumsetzer 40 beim Anheben und Absenken der Stützausleger 30,32 verschieben kann (vgl. Fig. 3c und d).

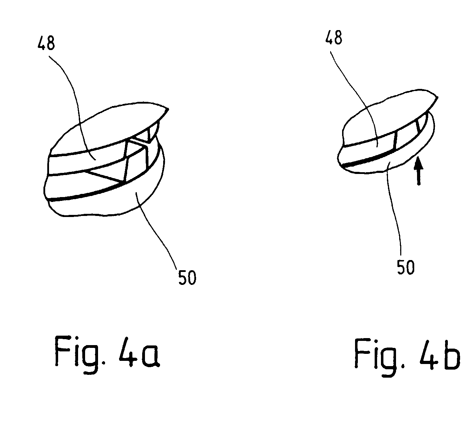

Die Hydrozylinder 42,44 sind Bestandteil eines Verriegelungsmechanismus. Der Verriegelungsmechanismus weist zusätzlich einen tragrahmenfesten Klauenring 48 und einen auslegerfesten Klauenring 50 auf, deren Verriegelungsklauen bei ausgeschwenktem Stützausleger 30,32 durch Anheben des betreffenden Stützauslegers 30,32 mit Hilfe der Hydrozylinder 42,44 von der in Fig. 4a gezeigten Freigabestellung in die in Fig. 4b gezeigte Verriegelungsstellung gebracht werden können.

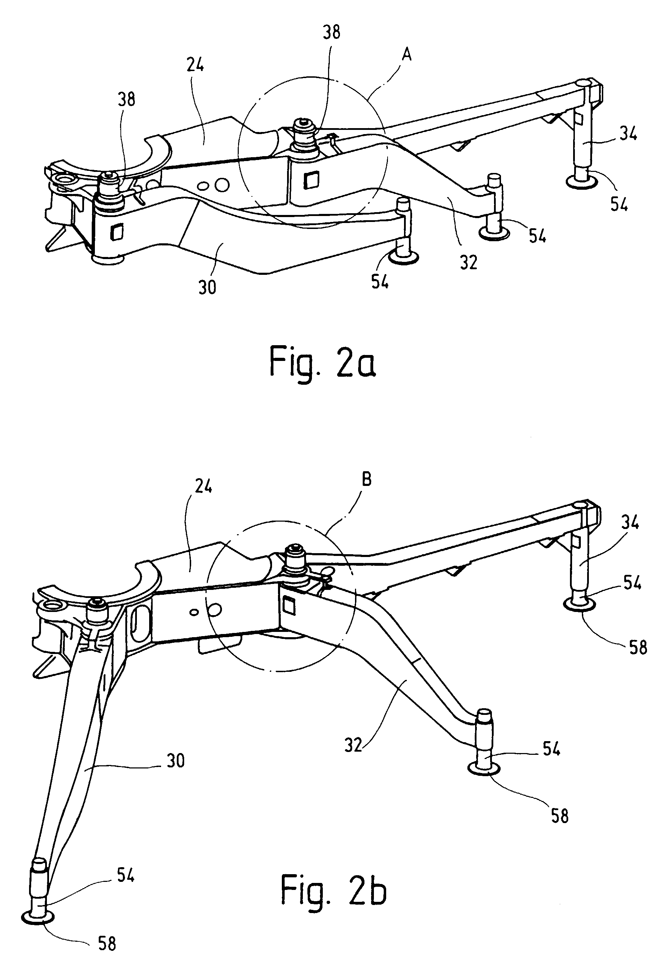

Die Stützausleger 30,32 und die rückwärtigen Stützbeine 34 weisen an ihrem freien Ende ein Fußteil 54 auf, das mit hydraulischen Mitteln in Richtung Untergrund 56 absenkbar ist, so daß der Fahrzeugunterbau 14 mit den Rädern vom Untergrund abgehoben wird (Fig. 1, 2b). Das Absenken des Fußteils 54 kann erst erfolgen, wenn die Stützausleger 30,32 in ihre Abstützstellung ausgeschwenkt sind und der Verriegelungsmechanismus 48,50 durch Anheben der Stützausleger 30,32 mit den Hydrozylindern 42,44 in seine Sperrstellung gebracht ist. Mit diesen Maßnahmen wird gewährleistet, daß die über das Flugzeugwaschgerät auf den Fahrzeugunterbau 14 übertragenen Vertikal- und Horizontalkräfte und -momente nahezu spiel- und schlupffrei auf den Untergrund 56 übertragen werden können. Eine weitere Verbesserung in dieser Hinsicht wird dadurch erzielt, daß die Fußteile 54 eine Sohle 58 aus elastomerem, bodenseitig geriffelten Material aufweisen. Die zusätzlich vorgesehenen rückwärtigen Stützbeine 34 sorgen dafür, daß die Abmessungen der Stützausleger 30,32 relativ klein gehalten werden können und daß am Fahrzeugunterbau 14 zwischen den Stützauslegern 32 und den rückwärtigen Stützbeinen 34 noch genügend Platz zur Unterbringung von Waschmitteltanks 60 und Steuerschränken 62 bleibt.

Zusammenfassend ist folgendes festzustellen: Die Erfindung bezieht sich auf eine fahrbare Arbeitsmaschine mit einem mehrachsigen, die Arbeitsmaschine 16, 20,22 tragenden Fahrzeugunterbau 14. Zur Abstützung am Untergrund ist mindestens ein um eine zur Fahrzeughochachse parallele Schwenkachse 26,28 am Fahrzeugunterbau 14 von einer gegen eine Längsseite des Fahrzeugunterbaus eingeschwenkten Ruhestellung in eine seitlich ausgeschwenkte Abstützstellung verschwenkbarer, an seinem freien Ende mit einem vertikal ausfahrbaren Fußteil 54 bodenseitig abstützbarer Stützausleger 30,32 vorgesehen. Um sowohl vertikale als auch horizontale Kräfte und Kraftmomente über die Stützausleger 30,32 auf den Untergrund 56 weitgehend spiel- und schlupffrei übertragen zu können, ist jeder Stützausleger 30,32 mit einem Verriegelungsmechanismus versehen, der den Stützausleger 30,32 in seiner ausgeschwenkten Abstützstellung gegen Verdrehen um seine Schwenkachse 26,28 sperrt.

## Patentansprüche

1. Fahrbare Arbeitsmaschine mit einem mehrachsigen, die Arbeitsmaschine tragenden Fahrzeugunterbau (14), mit mindestens einem um eine zur Fahrzeughochachse parallele Schwenkachse (26,28) am Fahrzeugunterbau (14) oder an einem unterbaufesten Tragrahmen (24) von einer gegen eine Längsseite des Fahrzeugunterbaus (14) eingeschwenkten Ruhestellung in eine seitlich ausgeschwenkte Abstützstellung verschwenkbaren, an seinem freien Ende mit einem vorzugsweise vertikal ausfahrbaren Fußteil (54) bodenseitig abstützbaren Stützausleger (30,32) und mit einem den Stützausleger (30,32) in seiner ausgeschwenkten Abstützstellung gegen Verdrehen um seine Schwenkachse (26,28) sperrenden Verriegelungsmechanismus (2,44,48,50), **dadurch gekennzeichnet,** daß der Stützausleger (30,32) in seiner ausgeschwenkten Abstützstellung parallel zu seiner Schwenkachse (26,28) zwischen einer Sperrstellung und einer Freigabestellung des Verriegelungsmechanismus begrenzt gegenüber dem Fahrzeugunterbau (14) verschiebbar ist.

2. Fahrbare Arbeitsmaschine nach Anspruch 1, **dadurch gekennzeichnet,** daß der Verriegelungsmechanismus eine zwischen einander axial zugewandten stützausleger- und unterbaufesten Flächen angeordnete, in der ausgeschwenkten Abstützstellung durch axiales Anheben des Stützauslegers (30,32) spielfrei kuppelbare Klauenkupplung (48,50) aufweist.

3. Fahrbare Arbeitsmaschine nach Anspruch 1 oder 2, **dadurch gekennzeichnet,** daß der Verriegelungsmechanismus mindestens ein zwischen dem Fahrzeugunterbau (14) oder dem Tragrahmen (24) einerseits und dem Stützausleger (30,32) andererseits angeordnetes, vorzugsweise als Hydrozylinder (42,44) ausgebildetes Hubglied aufweist.

4. Fahrbare Arbeitsmaschine nach einem der Ansprüche 1 bis 3, **dadurch gekennzeichnet,** daß der Stützausleger (30,32) zwischen zwei im Abstand übereinander angeordneten unterbaufesten Lagerlaschen (36) schwenkbar sowie heb- und senkbar gelagert ist.

5. Fahrbare Arbeitsmaschine nach einem der Ansprüche 1 bis 4, **dadurch gekennzeichnet,** daß der Stützausleger (30,32) mit einem vorzugsweise hydraulischen Drehmotor (38) um die Schwenkachse (26,28) begrenzt verschwenkbar ist.

6. Fahrbare Arbeitsmaschine nach Anspruch 5, **dadurch gekennzeichnet,** daß der Drehmotor (38) ein unabhängig vom Verriegelungsmechanismus ansteuerbares Brems- oder Blockierorgan aufweist.

7. Fahrbare Arbeitsmaschine nach Anspruch 6, **dadurch** **gekennzeichnet,** daß der Drehmotor (38) einen radial über sein Motorgehäuse überstehenden, an seinem freien Ende im Abstand von der Schwenkachse drehfest mit dem Stützausleger (30,32) verbundenen Drehmomentumsetzer (40) aufweist.

8. Fahrbare Arbeitsmaschine nach einem der Ansprüche 1 bis 7, **dadurch gekennzeichnet,** daß das Fußteil (54) eine Sohle (58) aus elastomerem, vorzugsweise bodenseitig geriffeltem Material aufweist.

9. Fahrbare Arbeitsmaschine nach einem der Ansprüche 1 bis 8, **dadurch gekennzeichnet,** daß auf jeder Längsseite des Fahrzeugunterbaus (14) mindestens zwei seitlich ausschwenkbare, und in ihrer ausgeschwenkten Abstützstellung gegen Verdrehen gesicherte Stützausleger (30,32) angeordnet sind.

10. Fahrbare Arbeitsmaschine nach Anspruch 9, **gekennzeichnet durch** je ein im rückwärtigen Bereich auf den beiden Längsseiten des Fahrzeugunterbaus (14) angeordnetes, mit dem Fahrzeugunterbau (14) oder dem Tragrahmen (24) starr verbundenes, einen vertikal ausfahrbares Fußteil (54) aufweisendes Stützbein (34).

## Claims

1. A mobile machine, having a multi-axle vehicle chassis (14) carrying the machine and at least one supporting strut (30, 32) which is pivotable about a pivot axis (26, 28) parallel to the vertical axis of the vehicle on the vehicle chassis (14) or a support frame (24) fixed to the vehicle chassis from an inoperative position in which it is pivoted against a longitudinal side of the chassis (14) into a laterally pivoted supporting position, the free end of which supporting strut (30, 32) is adapted to be supported on the ground by means of a preferably vertically extendable foot portion (54), and comprising a locking mechanism (2, 44, 48, 50) which prevents the supporting strut (30, 32) from rotating about its pivot axis (26, 28) in its laterally pivoted supporting position, **characterized in that** the supporting strut (30, 32), in its laterally pivoted supporting position, is limitedly movable with respect to the chassis (14) between a locking position and a releasing position of the locking mechanism, parallel to its pivot axis (26,28).

2. The mobile machine of claim 1, **characterized in that** the locking mechanism comprises a claw coupling (48, 50) which is disposed between axially facing, strut-fixed and chassis-fixed surfaces, and which is adapted to be engaged without free play in the laterally pivoted supporting position by axial lifting of the supporting strut (30, 32).

3. The mobile machine of claim 1 or 2, **characterized in that** the locking mechanism comprises at least one lifting member which is disposed between the chassis (14) or the support frame (24) on the one hand and the supporting strut (30, 32) on the other hand, and which is preferably designed to be a hydraulic cylinder (42, 44).

4. The mobile machine of one of claims 1 to 3, **characterized in that** the supporting strut (30, 32) is borne between two chassis-fixed bearing brackets (36) which are disposed spaced at a distance above each other, such that it can be pivoted as well as lifted and lowered.

5. The mobile machine of one of claims 1 to 4, **characterized in that** the supporting strut (30, 32) is adapted to be limitedly pivotable about the pivot axis (26, 28) by means of a preferably hydraulic motor (38).

6. The mobile machine of claim 5, **characterized in that** the motor (38) comprises a braking or locking member which is adapted to be operated independently of the locking mechanism.

7. The mobile machine of claim 6, **characterized in that** the motor (38) comprises a torque converter (40) which radially protrudes over its motor casing and which is non-rotatably connected with its free end to the supporting strut (30, 32) at a distance from the pivot axis.

8. The mobile machine of one of claims 1 to 7, **characterized in that** the foot portion (54) comprises a sole (58) made of an elastomeric material which is preferably corrugated on its bottom side.

9. The mobile machine of one of claims 1 to 8, **characterized in that** at least two supporting struts (30, 32), which are laterally pivotal and secured against rotation in their laterally pivoted supporting position, are disposed on each longitudinal side of the vehicle chassis (14).

10. The mobile machine of claim 9, **characterized by** one supporting leg (34) disposed in the rearward region of each longitudinal side of the vehicle chassis (14), which is rigidly connected to the vehicle chassis (14) or the support frame (24) and which comprises a vertically extendable foot portion (54).

## Revendications

1. Engin mobile équipé d'un châssis inférieur (14) de véhicule à essieux multiples, portant ledit engin, comprenant au moins un bras d'appui (30, 32) en porte-à-faux qui peut pivoter sur le châssis inférieur (14) du véhicule ou sur un cadre de support (24) assujetti audit châssis inférieur, autour d'un axe de pivotement (26, 28) parallèle à l'axe vertical dudit véhicule, d'une position de repos rentrée par pivotement contre un côté longitudinal dudit châssis inférieur (14) du véhicule, à une position d'appui sortie par pivotement latéral, ledit bras pouvant prendre appui au sol par son extrémité libre, au moyen d'une embase (54) préférentiellement déployable dans le sens vertical ; et un mécanisme de verrouillage (2, 44, 48, 50) qui interdit au bras d'appui (30, 32) en porte-à-faux, occupant sa position d'appui sortie par pivotement, d'accomplir une rotation autour de son axe de pivotement (26, 28), caractérisé par le fait que, dans sa position d'appui prise par pivotement sortant, le bras d'appui (30, 32) en porte-à-faux peut accomplir un coulissement limité vis-à-vis du châssis inférieur (14) du véhicule, parallèlement à son axe de pivotement (26, 28), entre une position de blocage et une position de libération du mécanisme de verrouillage.

2. Engin mobile selon la revendication 1, caractérisé par le fait que le mécanisme de verrouillage présente un accouplement à crabots (48, 50) qui est interposé entre des surfaces tournées axialement l'une vers l'autre, solidaires du bras d'appui en porte-à-faux et du châssis inférieur, et qui peut être accouplé sans aucun jeu, dans la position d'appui prise par pivotement sortant, par soulèvement axial du bras d'appui (30, 32) en porte-à-faux.

3. Engin mobile selon la revendication 1 ou 2, caractérisé par le fait que le mécanisme de verrouillage comporte au moins un organe de levage préférentiellement réalisé sous la forme d'un vérin hydraulique (42, 44), qui est interposé entre le châssis inférieur (14) du véhicule ou le cadre de support (24), d'une part, et le bras d'appui (30, 32) en porte-à-faux, d'autre part.

4. Engin mobile selon l'une des revendications 1 à 3, caractérisé par le fait que le bras d'appui (30, 32) en porte-à-faux est monté avec faculté de pivotement, ainsi qu'avec faculté de soulèvement et d'abaissement, entre deux oreilles de portée (36) solidaires du châssis inférieur et agencées en superposition à distance.

5. Engin mobile selon l'une des revendications 1 à 4, caractérisé par le fait que le bras d'appui (30, 32) en porte-à-faux peut accomplir des pivotements limités autour de l'axe de pivotement (26, 28), au moyen d'un moteur de rotation (38) préférentiellement hydraulique.

6. Engin mobile selon la revendication 5, caractérisé par le fait que le moteur de rotation (38) présente un organe de freinage ou de blocage pouvant être activé indépendamment du mécanisme de verrouillage.

7. Engin mobile selon la revendication 6, caractérisé par le fait que le moteur de rotation (38) comporte un convertisseur (40) de couples de rotation qui fait saillie radialement au-delà du carter dudit moteur et est verrouillé en rotation au bras d'appui (30, 32) en porte-à-faux, par son extrémité libre, à distance de l'axe de pivotement.

8. Engin mobile selon l'une des revendications 1 à 7, caractérisé par le fait que l'embase (54) possède une semelle (58) en un matériau élastomère dont le fond est préférentiellement strié.

9. Engin mobile selon l'une des revendications 1 à 8, caractérisé par le fait qu'au moins deux bras d'appui (30, 32) en porte-à-faux pouvant être sortis par pivotement latéral, et dont la rotation est interdite dans leur position d'appui prise par pivotement sortant, sont disposés sur chaque côté longitudinal du châssis inférieur (14) du véhicule.

10. Engin mobile selon la revendication 9, caractérisé par une jambe d'appui (34) respectivement disposée dans la région postérieure, sur les deux côtés longitudinaux du châssis inférieur (14) du véhicule, reliée rigidement audit châssis inférieur (14) du véhicule ou au cadre de support (24), et munie d'une embase (54) déployable verticalement.
